# EUROPEAN PATENT SPECIFICATION

(11) **EP 3 536 902 B1**
(45) Date of publication and mention of the grant of the patent: **11.03.2020**
(21) Application number: 19155770.1
(22) Date of filing: 06.02.2019
(51) Int. Cl.: F01D 5/14, F01D 5/28, F01D 9/04, F01D 25/16, F01D 25/28

(54) **GAS TURBINE ENGINE COMPONENT**
GASTURBINENMOTORKOMPONENTE
COMPOSANT DE MOTEUR À TURBINE À GAZ

(30) Priority: 06.03.2018 GB 201803571
(43) Date of publication of application: 11.09.2019
(73) Proprietor: Rolls-Royce plc, London N1 9FX (GB)
(72) Inventor: di Mare, Luca, Derby, Derbyshire DE24 8BJ (GB); Rife, Max, Derby, Derbyshire DE24 8BJ (GB); Barbarossa, Fernando, Derby, Derbyshire DE24 8BJ (GB)
(74) Representative: Rolls-Royce plc

(56) References cited:
- EP-A1- 2 835 503
- WO-A1-2014/105425
- GB-A- 1 195 027
- US-A1- 2013 084 174

## Description

The disclosure relates to a component for a gas turbine engine comprising an outlet guide vane and a structural support such as a pylon.

A typical gas turbine for aircraft propulsion comprises an axial fan driven by an engine core. The engine core is generally made up of one or more turbines which drive respective compressors via coaxial shafts. The fan is usually driven by an additional lower pressure turbine in the engine core. The flow handled by the fan provides a major contribution to the thrust of the engine and is discharged through of outlet guide vanes (OGV) and through a bypass duct, which surrounds the rear part of the engine.

The bypass duct is split into crescent shaped portions downstream of the OGV by one or more pylons (which may also be referred to as bifurcations). The pylons are needed to host structures connecting the engine to the airframe as well as connecting lines for electrical power, fuel, oil and service air, or mechanical elements driving auxiliary machinery located on the fan case and driven by a core-mounted gear box.

The presence of the pylons means that downstream of the OGVs the bypass duct is asymmetric. The fan rotates past a non-uniform flow field as a result of the asymmetry of the bypass duct and as a result of the asymmetry of the intake duct. Under certain conditions the magnitude and pattern of the flow non-uniformity in proximity of the fan may be sufficient to reduce the fan operating range and to give rise to high levels of forcing on the fan blades. This phenomenon is undesirable and provisions are needed to reduce flow non-uniformity experienced by the fan.

United States patent application US2013/084174 A1 discloses a reinforced structural guide vane system includes an outer casing; a centre body within the outer casing; a plurality of structural guide vanes extending between and connected to the centre body and the outer casing; and a plurality of strut rods extended between and connected to the outer casing and to the centre body.

UK patent application GB1195027 A discloses a cowl whose outside diameter is less than that of a conventional cowl for the same fan diameter, so as to cause less drag.

It may therefore be desirable to provide an improved arrangement.

According to an aspect of the invention, there is provided a component arranged to extend across a bypass duct of a gas turbine engine, comprising: an outlet guide vane; and a structural support arranged to structurally support a radially inner further component of the gas turbine engine; wherein the outlet guide vane and the structural support are contiguous at a merged portion which is at a radially outer region of the component, and the merged portion has a radial extent less than the radial extent of the component. In other examples, in which there is a pylon, the pylon may not provide any structural supporting function and instead may provide a location to house cabling or power transmissions, for example. In the region of the merged portion the outlet guide vane and the structural support may have matching profiles so as to form a continuous aerodynamic profile.

The outlet guide vane and the structural support may be axially spaced apart over a portion of their radial extent so as to form a gap between the outlet guide vane and the structural support. The gap may be provided at a radially inner region of the component.

The outlet guide vane may comprise a guide vane root portion and the structural support may comprise a structural support root portion. The guide vane root portion and the structural support root portion may be axially spaced apart so as to form the gap. The axial spacing between the guide vane root portion and the structural support root portion may be less than 0.5 times the radial extent of the component.

The outlet guide vane may be arranged to be upstream of the structural support. The leading edge of the structural support may be concave. The leading edge of the outlet guide vane may be inclined rearwards.

The structural support (or pylon) may comprise at least one structural support member (e.g. one pylon member) and a structural support (e.g. a pylon) fairing which defines at least a part of the outer surface of the structural support (or pylon).

According to another aspect of the invention, there is provided a gas turbine engine as set forth in claim 10. The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 schematically shows a cross section through a gas turbine engine; and
Figure 2 schematically shows a cross section through a bypass duct in which a component comprising an outlet guide vane and a structural support is located.

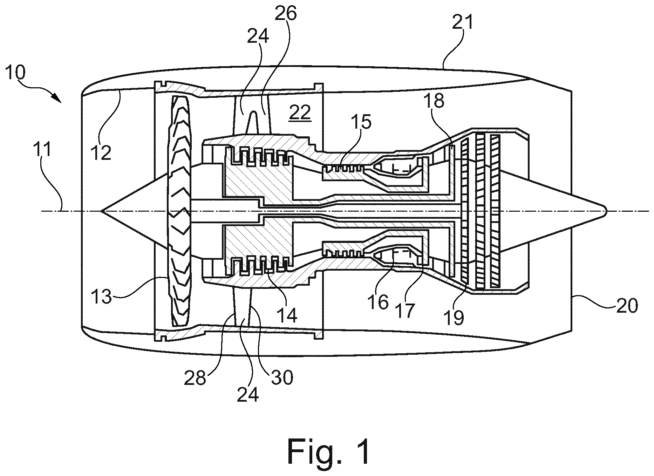

With reference to **Figure 1**, a gas turbine engine is generally indicated at 10, having a principal and rotational axis 11. The engine 10 comprises, in axial flow series, an air intake 12, a propulsive fan 13, an intermediate pressure compressor 14, a high pressure compressor 15, combustion equipment 16, a high-pressure turbine 17, and intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place. The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shafts.

A plurality of circumferentially arranged outlet guide vanes 24 are located within and extend across the bypass duct 22 downstream of the fan 13. Each OGV 24 includes an aerofoil portion and has a leading edge 28 and a trailing edge 30. A pressure surface and a suction surface extend between the leading edge and the trailing edge. Each of the OGVs 24 may be twisted and leant so as to alter the axial and tangential position of the OGVs.

In the present arrangement a structural support in the form of a pylon 26 (or bifurcation) is provided downstream of the OGVs 24. In this arrangement there is a single pylon 26, but it should be appreciated that there may be two diametrically opposed pylons 26, or more than two pylons 26. Although not shown, the pylon 26 comprises one or more structural support rods (or members) provided with an outer in the form of aerodynamically shaped fairings. The pylon 26 both supports the engine core within the nacelle, and provides a housing for encasing and directing electrical connections. The pylon 26 may encase a radial drive shaft linking a case mounted accessory gearbox and the intermediate pressure compressor 14.

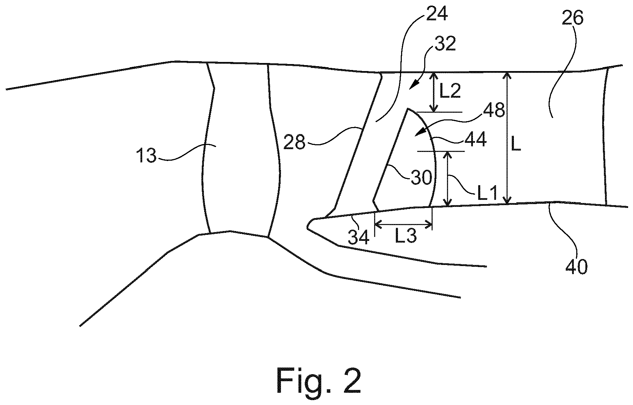

Referring now to **Figure 2**, in the present arrangement the pylon 26, which is downstream of the OGVs, is contiguous with an outlet guide vane 24. The outlet guide vane 24 and the leading and trailing edges 28, 30 are inclined rearwards (from root to tip). The outlet guide vane 24 and the pylon 26 are contiguous at a merged portion 32 which is at a radially outer position. This is achieved by designing the pylon fairings 26 such that they match the profile of the outlet guide vane 24. This means that there is a smooth continuous aerodynamic surface between the outlet guide vane 24 and the pylon 26 in the region of merged portion. In this arrangement the outlet guide vane 24 and the pylon 26 are contiguous only along a portion of their radial extent L2. In particular, the radially inner root 34 of the outlet guide vane 24 is axially spaced from the radially inner root 40 of the pylon 26 by a distance L3. This forms a gap 48 between the trailing edge 30 of the outlet guide vane 24 and the leading edge 44 of the pylon 26.

The radially inner portion of the pylon 26 that is axially set-back from the trailing edge 30 of the outlet guide vane 24 has a radial extent L1. The leading edge 44 of the pylon 26 between the set-back portion and the merged portion 32 is in the form of a smooth curve. This results in the leading edge 44 of the pylon 26 having a concave shape. It should be appreciated that other geometries could be chosen depending on the desired operating conditions.

In this arrangement the merged portion 32 has a radial length L2 which is less than the radial length L of the pylon 26. The radial length L2 may be chosen such that that L2/L is no greater than 0.8, for example no greater than 0.5, for example no greater than 0.4, for example no greater than 0.3, for example no greater than 0.2, for example no greater than 0.1. The radial extent L1 of the set-back portion of the pylon may be chosen such that L1/L is between 0.2 and 0.8 and/or may be no greater than 0.5. The axial spacing L3 may be chosen such that L3/L is less than 0.7, for example less than 0.5, for example less than 0.3.

The merging of the outlet guide vane 24 and the pylon 26 results in improved flow guiding around the pylon 29. This may result in a more uniform flow field which may improve the fan operating range and may reduce the loading/forcing on the fan blades. Further, providing a gap 48 between the outlet guide vane 24 and the pylon 29 minimises the aerodynamic interaction between the outlet guide vane 24 and the pylon 26, resulting in improved aerodynamic performance.

It will be understood that the invention is not limited to the embodiments above-described and various modifications and improvements can be made within the scope defined by the appended claims. Except where mutually exclusive, any of the features may be employed separately or in combination with any other features and the disclosure extends to and includes all combinations and sub-combinations of one or more features described herein.

## Claims

1. A component arranged to extend across a bypass duct (22) of a gas turbine engine (10), comprising:
an outlet guide vane (24); and
a structural support (26) arranged to structurally support a radially inner further component of the gas turbine engine (10);
**characterised in that** the outlet guide vane (24) and the structural support (26) are contiguous at a merged portion (32) which is at a radially outer region of the component, and the merged portion (32) has a radial extent (L2) less than the radial extent (L) of the component.

2. A component according to claim 1, wherein the outlet guide vane (24) and the structural support (26) are axially spaced apart over a portion of their radial extent so as to form a gap (48) between the outlet guide vane (24) and the structural support (26).

3. A component according to claim 2, wherein the gap (48) is provided at a radially inner region of the component.

4. A component according to claim 2 or 3, wherein the outlet guide vane (24) comprises a guide vane root portion (34) and wherein the structural support (26) comprises a structural support root portion (40), and wherein the guide vane root portion (34) and the structural support root portion (40) are axially spaced apart so as to form the gap (48).

5. A component according to claim 4, wherein the axial spacing (L3) between the guide vane root portion and the structural support root portion is less than 0.5 times the radial extent (L) of the component.

6. A component according to any preceding claim, wherein the outlet guide vane (24) is arranged to be upstream of the structural support (26).

7. A component according to any preceding claim, wherein the leading edge (44) of the structural support (26) is concave.

8. A component according to any preceding claim, wherein the leading edge (28) of the outlet guide vane (24) is inclined rearwards.

9. A component according to any preceding claim, wherein the structural support (26) comprises at least one structural support member and a structural support fairing which defines at least a part of the outer surface of the structural support.

10. A gas turbine engine (10) comprising a bypass duct (22), wherein a component in accordance with any preceding claim extends across the bypass duct with the structural support (26) structurally supporting a radially inner further component of the gas turbine engine.

## Patentansprüche

1. Komponente, die angeordnet ist, um sich durch einen Bypasskanal (22) eines Gasturbinentriebwerks (10) zu erstrecken, umfassend:
eine Auslassleitschaufel (24); und
eine Strukturstütze (26), die angeordnet ist, um eine radial innere weitere Komponente des Gasturbinentriebwerks (10) strukturell abzustützen;
**dadurch gekennzeichnet, dass** die Auslassleitschaufel (24) und die Strukturstütze (26) an einem Zusammenführungsabschnitt (32), der sich an einem radial äußeren Bereich der Komponente befindet, aneinander anliegen und der Zusammenführungsabschnitt (32) eine radiale Ausdehnung (L2) aufweist, die kleiner ist als die radiale Ausdehnung (L) der Komponente.

2. Komponente nach Anspruch 1, wobei die Auslassleitschaufel (24) und die Strukturstütze (26) über einen Abschnitt ihrer radialen Ausdehnung axial beabstandet sind, um zwischen der Auslassleitschaufel (24) und der Strukturstütze (26) einen Spalt (48) zu bilden.

3. Komponente nach Anspruch 2, wobei der Spalt (48) an einem radial inneren Bereich der Komponente bereitgestellt ist.

4. Komponente nach Anspruch 2 oder 3, wobei die Auslassleitschaufel (24) einen Leitschaufel-Wurzelabschnitt (34) umfasst, und wobei die Strukturstütze (26) einen Strukturstütze-Wurzelabschnitt (40) umfasst, und wobei der Leitschaufel-Wurzelabschnitt (34) und der Strukturstütze-Wurzelabschnitt (40) axial beabstandet sind, um den Spalt (48) zu bilden.

5. Komponente nach Anspruch 4, wobei der axiale Abstand (L3) zwischen dem Leitschaufel-Wurzelabschnitt und dem Strukturstütze-Wurzelabschnitt weniger als das 0,5-fache der radialen Ausdehnung (L) der Komponente ist.

6. Komponente nach einem vorherigen Anspruch, wobei die Auslassleitschaufel (24) stromaufwärts von der Strukturstütze (26) angeordnet ist.

7. Komponente nach einem vorherigen Anspruch, wobei die Vorderkante (44) der Strukturstütze (26) konkav ist.

8. Komponente nach einem vorherigen Anspruch, wobei die Vorderkante (28) der Auslassleitschaufel (24) nach hinten geneigt ist.

9. Komponente nach einem der vorherigen Ansprüche, wobei die Strukturstütze (26) mindestens ein Strukturstützelement und eine Strukturstützverkleidung umfasst, die mindestens einen Teil der Außenfläche der Strukturstütze definiert.

10. Gasturbinentriebwerk (10), umfassend einen Bypasskanal (22), wobei sich eine Komponente nach einem vorherigen Anspruch durch den Bypasskanal erstreckt, wobei die Strukturstütze (26) eine weitere, radial innere Komponente des Gasturbinentriebwerks strukturell stützt.

## Revendications

1. Composant agencé pour se déployer à travers un conduit de dérivation (22) d'un moteur à turbine à gaz (10), comprenant :
un aubage directeur de sortie (24) ; et
un support structurel (26) conçu pour supporter de manière structurelle un composant supplémentaire radialement interne du moteur à turbine à gaz (10) ;
**caractérisé en ce que** l'aubage directeur de sortie (24) et le support structurel (26) sont contigus au niveau d'une partie fusionnée (32) qui se trouve au niveau d'une zone radialement externe du composant, et la partie fusionnée (32) a une étendue radiale (L2) inférieure à l'étendue radiale (L) du composant.

2. Composant selon la revendication 1, dans lequel l'aubage directeur de sortie (24) et le support structurel (26) sont espacés axialement l'un de l'autre sur une partie de leur étendue radiale de façon à former un jeu (48) entre l'aubage directeur de sortie (24) et le support structurel (26).

3. Composant selon la revendication 2, dans lequel le jeu (48) et prévu au niveau d'une zone radialement interne du composant.

4. Composant selon la revendication 2 ou 3, dans lequel l'aubage directeur de sortie (24) comprend une partie d'emplanture d'aubage directeur (34) et dans lequel le support structurel (26) comprend une partie d'emplanture de support structurel (40), et dans lequel la partie d'emplanture d'aubage directeur (34) et la partie d'emplanture de support structurel (40) sont espacés axialement de façon à former le jeu (48).

5. Composant selon la revendication 4, dans lequel l'espacement axial (L3) entre la partie d'emplanture d'aubage directeur et la partie d'emplanture de support structurel est inférieur à 0,5 fois l'étendue radiale (L) du composant.

6. Composant selon l'une quelconque revendication précédente, dans lequel l'aubage directeur de sortie (24) est agencé pour être en amont du support structurel (26).

7. Composant selon l'une quelconque revendication précédente, dans lequel le bord d'attaque (44) du support structurel (26) est concave.

8. Composant selon l'une quelconque revendication précédente, dans lequel le bord de fuite (28) de l'aubage directeur de sortie (24) est incliné vers l'arrière.

9. Composant selon l'une quelconque revendication précédente, dans lequel le support structurel (26) comprend au moins un élément de support structurel et un carénage de support structurel qui définit au moins une partie de la surface externe du support structurel.

10. Moteur à turbine à gaz (10) comprenant un conduit de dérivation (22), dans lequel un composant selon l'une quelconque revendication précédente se déploie à travers le conduit de dérivation avec le support structurel (26) supportant de manière structurelle un composant supplémentaire radialement interne du moteur à turbine à gaz.
